# EUROPEAN PATENT SPECIFICATION

(11) **EP 4 248 731 B1**
(45) Date of publication and mention of the grant of the patent: **20.08.2025**
(21) Application number: 22164298.6
(22) Date of filing: 25.03.2022
(51) Int. Cl.: A01F 15/04, A01F 15/14, A01F 15/08

(54) **A BALING MACHINE INCLUDING A KNOTTER AND NEEDLE COMBINATION**
BALLENPRESSE DIE EINE KNOTER- UND NADEL-KOMBINATION UMFASST
MACHINE DE MISE EN BALLES COMPRENANT UNE COMBINAISON DE NOUEUR ET D'AIGUILLE

(43) Date of publication of application: 27.09.2023
(73) Proprietor: CNH Industrial Belgium N.V., 8210 Zedelgem (BE)
(72) Inventor: Helewaut, Olivier, 8020 Ruddervoorde (BE); Monteyne, Niklaas G.C., 8370 Blankenberge (BE); Loosfelt, Yves, 9870 Zulte (BE); Derynck, Lynn, 8470 Moere (BE)
(74) Representative: CNH Industrial IP Department

(56) References cited:
- EP-A1- 3 114 921
- EP-A1- 3 157 320
- EP-A1- 3 298 884

## Description

### Background of the Invention

The invention relates to a baling machine including a knotter and needle combination.

Baling machines are well known in agriculture and are widely used to bale plant matter in fields into bales that may be conveniently and effectively handled, stored and used. Baling machines are known that bale forage products such as grass and other leaves used as hay or other types of animal feed; straw or other plant parts resulting as byproducts from a harvesting operation such as combine harvesting; cotton; and other plant parts of commercial or other value.

The majority of baling machines in use in Europe are designed to be towed behind an agricultural tractor or another towing vehicle that, under the control of an operator and/or using operator-monitored software, moves the baling machine about a field and provides power to operate internal parts of the baling machine. The provision of power is effected by way of a rotatable power take-off (PTO) shaft connected to the rotary power take-off that typically is part of the tractor.

Known designs of agricultural baling machine include a pick-up, mounted at the front of the machine, that causes the ingestion of plant matter into the interior of the machine as it moves about a field. Differing internal designs of baler components are known in the part of the machine downstream of the pick-up.

One commonplace type of baling machine is often referred to as a *"rectangular baler".* This includes a cuboidal bale-forming chamber in which the ingested plant matter is compacted into a cuboidal shape by a piston or plunger that reciprocates longitudinally back and forth inside the bale-forming chamber between retracted and extended positions. Charges of plant matter repeatedly are fed into the bale-forming chamber from the pick-up by the mechanism of the baling machine. This action is effected in timed relation to the motion of the plunger such that feeding of plant matter coincides with retraction of the plunger to one end of the bale-forming chamber. The plant matter then is compacted by subsequent extension strokes of the plunger along the bale-forming chamber.

The reciprocal rectilinear motion of the plunger is effected using a drive train that converts rotary drive derived from the rotating PTO shaft, connected to the baling machine above the pick-up, into reciprocal motion of the plunger. This typically is achieved by changing, in the drive train, the axis of the rotation from one parallel to the longitudinal length of the baling machine to an axis of rotation transverse thereto.

Such transverse-axis rotation is applied to a crank that is pivot-jointed to one end of a conrod the other end of which is pivot-jointed to the plunger, that is moveably captive inside the bale-forming chamber. As a result, rotation of the crank causes the reciprocal movement of the plunger, compacting the charges of plant matter fed into the bale-forming chamber.

In many baling machine designs it is possible to adjust the length and density of rectangular plant matter bales, by adjusting one or more settings of the baling machine.

In those baling machines permitting adjustment of the bale length, a metering or measuring wheel may be turned while baling takes place to determine the point in the formation of a bale at which a twine applying and knotting mechanism activates to tie off the bale once a chosen length is achieved.

In prior art baling machines the twine is dispensed from a spool in a twine box stored typically near the bottom of the inside of the baling machine to be fed to the interior of the bale-forming chamber. Feeding of the twine occurs through operation of a row of needles that are mounted on a cyclic needle yoke drive that causes them periodically to penetrate the bale-forming chamber. As is well known in the baling machine art the needles have a claw-like shape and in a typical baling machine the rear edge of each needle is formed with a groove terminating in a needle eye at the free end of the needle. The needles catch the twine in or near the spools, with the twine extending along the grooves and through the eyes, during the reciprocal motion induced by the yoke drive. The yoke drive motion draws the twine upwardly inside the bale-forming chamber, along the side of a formed bale, as the needles advance.

When the needles reach the upwardly highest point in their cyclical travel the lengths of twine as a result are presented adjacent a row of knotters that correspond in number to the needles. The knotters are shaped and are driven to move by a rotating knotter drive shaft in a manner that catches the twine lengths presented on the ends of the needles. Once the twine has been caught the knotters, which typically are mounted on cam and gear supports, describe a complex locus that forms a loop in the twine and draws part of the twine through the loop to create a knot in each twine length. The action of the needles ensures that when the knots are formed the bale is tightly tied by the twine such that its integrity is maintained during subsequent handling.

While the knots are being formed the needles withdraw from the bale-forming chamber, each drawing a line of twine downwardly adjacent the bale. This becomes the first of two lines of twine, per knot, used to tie the next bale in sequence to be tied. Subsequent upward motion of the needles causes a second, adjacent line of twine to be presented to each knotter. Thus in practice a double length of twine is used to constitute each knot, and double lines of twine extend along the sides of the bales.

As each knot is completed a knife operates to sever the twine with the result that the tied bale is free to be ejected from the bale-forming chamber onto the ground behind the baling machine as it is towed along a field. Assuming all the parts of the baling machine operate as intended the tied bale is a dense, strong, self-supporting cuboid of packed plant matter.

In a modern baling machine one or more fans is provided in the vicinity of the knotters to blow away dust, plant matter and particles of twine that otherwise could accumulate to cause malfunctions.

In prior art baling machines the motion of the various parts of the twine feeding and knotting mechanisms is provided by way of derivative rotary drives that are in one way or another connected to the rotatable power take-off shaft. Such an arrangement permits the motions of the needle yoke drive and the knotter drive shaft to be timed to the reciprocation of the plunger longitudinally back and forth along the bale-forming chamber.

One reason for such an arrangement is to try and prevent collisions between the needles and the plunger as they move at high speed, following complex paths, inside the baling machine. Nonetheless existing derivative rotary drive approaches to powering the needle yoke drive and knotter drive shaft are sub-optimal for a number of reasons.

First among these is that prior art arrangements are incapable of taking account of wear of parts of the twine feeding, knotting and plunger motion components. It therefore is necessary to carry out regular, extensive servicing in order to maintain the various moving parts in their correct alignment and functioning correctly. The maintenance burden for farmers and contractors who operate prior art baling machines can be very costly. If it is not completed needle collisions can occur leading to serious damage to parts of the baling machine.

Secondly it is not unusual for the twine dispensed from the twine box to break at some point in the twine feeding and knotting cycles. This can be because of use of an incorrect specification of twine; or because inaccurate settings of the baling machine may induce excessive twine tension during parts of the cycles described above. Sometimes however twine even if correctly specified can break unexpectedly for reasons that are not entirely understood.

When the twine breaks unless the tractor is of a kind equipped with twine break sensors, appropriately coded twine break alerting software and an alarm and/or display for notifying of a twine break, the twine feeding and knotting mechanisms may continue to operate for multiple cycles after the rupture, without processing any twine, until the driver of a tractor towing the baling machine notices that bales are being formed without being tied.

Such bales are of no commercial value as they cannot be handled without falling apart; and there is a serious risk of untied bales separating inside the baling machine. When this happens it usually becomes necessary to cease baling operations and undertake a lengthy operation to clear plant matter from the interior parts of the machine. Moreover it then is necessary to attempt to re-bale the cleared plant matter, but this is not always fully successful because it no longer lies in regular swathes or windrows in the field and therefore is difficult to bale successfully or consistently. Bales produced immediately following a clearing operation inside a baling machine often are of poor quality and therefore of low commercial value.

Even if a tractor operator promptly notices that an event such as a twine breakage has occurred, and immediately seeks to terminate baling operations, operation of the baling machine must continue for multiple cycles because of the significant inertia of the rotating parts of the machine. Such continuing reciprocation of parts of the baling machine for multiple cycles following a twine break can cause loose ends of twine to become entrained and tangled in the moving parts of the baling machine. The resulting twine-entangled parts may jam and potentially suffer damage, in a manner that usually is impossible to prevent.

It is known to provide a shear bolt or similar shear fastener as part of the rotary needle yoke drive summarised above. This can minimise the damage caused to or by the needle mechanism in the event of forces experienced by the mechanism exceeding the shear threshold of the shear bolt.

Following shearing the shear bolt must be replaced, but in prior art baling machines difficulties may arise when seeking to do this.

Once the shear bolt is replaced it then usually is necessary to re-position various parts of the baling machine before reconnecting the rotary drives, in order to ensure that the timing of their motions remains correct once power to the baling machine is restored. Overall, replacing the shear bolt typically is a difficult, potentially dangerous and time-consuming activity.

EP3157320A1 describes an agricultural baler (10) including a main bale chamber (26), a plunger (30) configured to compress crop material in the bale chamber (26), a counter crank (54), and a plurality of needles (36).

EP3114921A1 describes an agricultural baler (10) includes a main bale chamber (26), needles (36), knotters (34), a triggering system (52), a knotter lock (54), a blow-off mechanism (56) and a monitoring system (58).

The invention seeks to solve or at least ameliorate one or more drawbacks of prior art baling machines.

Embodiments of the invention are suitable for inclusion in all baling machine types and machinery combinations disclosed herein. The disclosure of embodiments or parts of embodiments herein includes their disclosure in combination with all baling machine types and machinery combinations referred to herein, even if these are indicated as forming part of the prior art.

The terms *"baling machine"* and *"baler"* are used synonymously herein and in the art generally.

The term *"control device"* includes but is not limited to one or more logic circuits and/or programmable devices as described herein.

The term *"logic circuit"* includes within its scope, but is not limited to, electronic circuits, Op Amp circuits, pneumatic or hydraulic logic circuits and software analogues of such circuits as may be embodied using simulation packages such as but not limited to VisSim^{™}. Logic circuits as referred to herein, whether programmable or not, non-limitingly may be permanently wired, temporarily wired, created through use of wireless communication techniques or formed as for example integrated circuits. Software logic circuits are also within the scope of the disclosure and may be employed to control and/or process signals in the same way as physical circuits.

Logic circuits and programmable devices as referred to herein may be modular in the sense of their parts being contained within a common housing; or they may occupy more than one location in the baling machine. Logic circuits and programmable devices may be formed as a number of distributed components not all of which, or indeed potentially none of which, are physically located on or in the baling machine. Logic circuits and programmable devices as referred to may include or be connected to, or may omit (as appropriate), one or more display, printing, signal transmission, signal reception, human interface and/or data interface or receipt devices. Overall considerable variability of the exact forms of logic circuits, programmable devices and other control devices is possible within the scope hereof as will occur to the person of skill in the art.

The terms *"knotter shaft"* and *"knotter drive shaft"* are used synonymously herein.

The terms *"piston"* and *"plunger"* in the context of the principal, moveable, bale-forming part of a bale-forming chamber are used synonymously herein.

The term *"plant matter"* and derivatives includes all types of matter that potentially may be ingested into a baling machine for the purpose of being formed into bales.

The term *"power take-off"* is synonymous with the acronym *"PTO".*

The term *"programmable device"* includes within its scope, but is not limited to, microprocessors, ASICs, handheld devices (smartphones), portable computing devices such as laptop computers and non-portable computing devices that are operatively connected (e.g. using wires or wirelessly) in order to perform functions as described.

The term *"signal"* except where the context requires otherwise is generally taken herein to be a reference to an electrical or electronic signal. In general in embodiments described herein the transmission of signals occurs by way of wired connections, and these are taken to be provided in sufficient quantity and extent to provide for the described signal transmissions. However other forms of signal transmission, including wireless transmission, are possible.

The term *"tractor"* embraces a wide variety of machines, especially vehicles, that are potentially capable of towing or otherwise causing locomotion of a baling machine, as will be known to the person of skill in the art.

The term *"trip drive"* is a reference to a cyclic drive that once engaged normally must complete a cycle (such as but not limited to 360° of rotation) before the drive can be, or becomes, disengaged.

Control devices, programmable devices and logic circuits as disclosed herein may include apparatus specially constructed for the required purposes, or may comprise one or more general-purpose computers, selectively activated or reconfigured by a computer program stored in the computer. Such a computer program may be stored in a non-transitory computer readable storage medium, which could be, but is not limited to, any type of disk including floppy disks, optical disks, CD-ROMs, an magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, any computers or similar or derivative devices referred to may include a single processor, or may be architectures employing multiple processor designs for increased computing capability.

### Summary of the Invention

According to the present invention a baling machine in accordance with claim 1 is provided, the baling machine including a knotter and needle combination; a bale-forming chamber that supports a longitudinally reciprocable bale-forming plunger, the bale-forming chamber being penetrable by one or more needles supporting one or more lengths of twine for knotting bales, the one or more needles being pivotably mounted via a cyclic needle drive for reciprocal movement into and out of the bale-forming chamber, and the baling machine including a knotter drive shaft supporting and driving one or more knotters corresponding in number to the needles, the knotters each being capable of engaging twine supported by a respective needle penetrating the bale-forming chamber and describing a knot-forming locus when driven by the knotter drive shaft, wherein the cyclic needle drive and the knotter drive shaft include one or more drive train permitting selective independence of the cyclic needle drive from movement of the knotter drive shaft and/or adjustment of timing of the cyclic needle drive relative to activation of the knotter drive shaft; wherein the baling machine includes one or more sensors for sensing conditions prevailing in the baling machine and generating one or more signals indicative thereof; and the baling machine includes one or more control devices that determine, based on the one or more signals, the operational status of the knotter and needle combination and that command operation or deactivation of one or more sub-systems of the baling machine in dependence thereon.

A primary advantage of such a baling machine is that it beneficially may be controlled in a manner that obviates or at least minimises the risk of needle collisions.

Also if a failure of parts of the needle drive and/or the knotter mechanism occurs, or if a twine break occurs, the ability independently to control the needle drive and the knotter drive shaft means that halting of parts of the baler may be effected much more quickly than in the prior art.

This is partly because the ability to de-couple motion of the mentioned sub-systems means that the maximum inertia that must be overcome when halting the sub-systems is less than in prior art baling machines. Hence halting of the parts is quicker to achieve.

Moreover the use of sensors that generate signals means that the reaction time when seeking to halt the sub-systems is less than when seeking to disengage complex, interconnected mechanical linkages as is often a requirement in the prior art.

Also the use of electronic control, as is preferred, means that warnings and alerts can be immediately sent e.g. to an operator's cab in the towing tractor. Thus a tractor operator may rapidly be made aware of a fault condition and may halt baling operations in a manner minimising the risk of damage to the baling machine or the towing tractor, and also minimising the chance of sub-standard bales being formed.

A further advantage of independent control of the needle drive and the knotter shaft is that it is as a result possible to adjust the relative timing of operation of the needles and knotter, for example to suit particular crop types, crop/weather/soil conditions or other parameters of the crop or the harvesting operation and/or to take account of characteristics of the twine. In turn this optimises operational efficiency and provides for a potentially reduced maintenance and adjustment burden while maintaining accurate needle and knotter operation.

Preferably the needle drive is a yoke drive as is known in the prior art, although other forms of needle drive also are possible.

According to the invention, the needle drive is or includes a trip drive motor that is selectively operable and that when operated completes a drive cycle that causes engagement of driving of the knotter drive shaft and activation of the cyclic needle drive; and the one or more sensors includes a sensor sensing operation of the trip drive motor. Such a motor is desirable in the majority of situations because it assists to provide the indicated advantages of the invention.

Optionally the baling machine includes a knotter clutch that is caused to engage on operation of the trip drive motor to cause driving of the knotter drive shaft and the cyclic needle drive; and includes a second clutch mechanism that is caused to engage on operation of the trip drive motor to cause engagement of the cyclic needle drive and/or adjustment of the timing of motion of the cyclic needle drive relative to motion of the knotter drive shaft. The provision of two clutches in the drive train driving the motion of the knotters and the motion of the needles beneficially permits the use of a single motor (i.e. the trip drive motor) to initiate both kinds of motion while economically allowing decoupling of the respective motions when this is desired. However other means of creating independent control of the knotter and needle drive motions (such as but not limited to the use of two or more independently controllable motors for the respective drives) may alternatively be employed.

Preferably the baling machine includes an openable shield, the one or more sensors includes a shield sensor sensing the open/closed status of the openable shield and the one or more control devices inhibits activation of the trip drive motor when the shield sensor senses an open status of the shield.

Such an arrangement provides clear safety advantages for example when an operator wishes to open up a baling machine for purposes of clearing blockages or fixing broken twine. It is strongly desirable that operation of the needle drive be inhibited at such a time.

In more detail preferably the baling machine includes one or more fans in the vicinity of the one or more knotters, the openable shield when closed inhibiting access to the one or more fans and the one or more knotters. Both the fan(s) and the knotters are capable of inflicting injury if accessed by an operator while operating and the existence of the shield prevents accidents in this regard. The shield moreover usefully may at least partly define a path for twine, dust and debris blown clear of the knotters by the one or more fans.

In a preferred refinement the baling machine includes one or more control actuator that when actuated causes the one or more control devices to over-ride inhibiting of the needle trip drive motor and effect completion of a drive cycle when the shield is open.

Permitting operation of the needle trip drive in this way when the shield is open allows a controlled test cycle of the needle sub-system to occur, for example after clearing of a broken twine problem. Permitting such a step when the shield is open allows visual inspection of the needle sub-system at such a time. The ability to decouple motion of the needles from the remainder of the knotting systems is potentially advantageous at such a time.

It is however desirable to ensure that the control actuator cannot be accidentally actuated. To this end preferably the one or more control actuator is located on the baling machine so as to be humanly accessible only when the shield is open. Assuming it is carefully designed this feature ensures a safe operation, requiring a positive decision on the part of an operator to actuate the over-ride facility and thereby permit operation of the needle trip drive motor. Thus accidental operation of the actuator, as could happen if it was accessible without the shield having been intentionally opened, is deterred or prevented.

If the design of the baling machine is such that the control actuator cannot be located so as to be humanly accessible only when shield is open, the control logic of the baler preferably then is arranged to require the operator to trigger the actuator using a complex sequence that is hard to replicate accidentally, e.g. by pressing one or more buttons in a certain sequence (such as but not limited to a short press followed by a long press). Assuming the control logic is carefully designed, this also ensures safe operation.

In embodiments described herein preferably the baling machine includes a brake disc secured for co-rotation with the knotter shaft, the one or more sensors including a brake disc sensor sensing the rotational position of the brake disc and the one or more control devices determining the cyclical position of the knotter shaft in dependence on the sensed rotational position of the brake disc.

Such an arrangement beneficially may be used to sense the position of the knotters, and also to generate combinations of sensor signals (or the absence of such signals) indicating either successful operation of the knotters or a failure to drive the knotters.

Conveniently the baling machine includes a brake that is controlledly capable of acting on the knotter shaft brake disc to cause braking of the cyclic needle drive. Such a brake may be linked to other control elements of the baling machine as disclosed herein with the result that (subject to completion of a cycle as determined by the nature of the trip drive) the knotter mechanism may rapidly be brought to a halt when required.

Also preferably the one or more sensors includes one or more sensors of breakage of the twine and/or mis-tying of a knot.

Twine break sensors are known *per se* and may beneficially be employed in the baling machine described herein in embodiments. In practice multiple sensors may contribute to the generation of one or more signals that indicate breaking of the twine.

Such sensors also are known that detect mis-tying of one or more knots, and advantageously may be included in embodiments described herein.

Conveniently the baling machine includes a rotatable length-measuring wheel that rotates in proportion to the length of a bale formed in the bale-forming chamber; and the one or more sensors includes a sensor of rotation of the length-measuring wheel that generates a signal proportional to the length of the bale. In embodiments the length-measuring wheel may be a star wheel of a kind that is known *per se* in prior art baling machines.

The length of a formed bale is a useful input parameter to a controlled twine-applying and knotting operation. It is possible to determine this parameter based on e.g. the settings of the baling machine, but the use of a length-measuring star wheel additionally provides feedback control and thereby improves the accuracy of the control regime implemented in the baling machine.

As implied the use of a length-measuring wheel is preferred. It is alternatively possible to employ optical bale sensing apparatus and/or a length-measuring device that operates on the basis of measurements of the twine (and especially the operation of the twine break sensor(s) referred to above). Such arrangements are within the scope of the disclosure hereof.

In an in-use condition the baling machine includes one or more rotatable shaft connected to a rotating power take-off. The two or more sensors may include a sensor of a rotational speed of one or more said rotatable shaft; and the one or more control devices may control timing of operation of one or more sub-systems of the baling machine in dependence on the sensed rotational speed.

Such a speed measure is a useful input to the control system of described embodiments, because operation at higher speed may call for different control timings than operating at a lower speed. A sensor employed to measure speed additionally or alternatively may be configured, coded or otherwise arranged as a rotational position measurement apparatus. When so configured a rotational position of a rotatable or otherwise reciprocable part between e.g. 0° and 360° (or another, greater or smaller, rotational interval), if necessary following treatment to avoid some forms of ambiguity that can arise when more than 360° of rotation occurs, also is an optional, useful input to the control logic.

Preferably the baling machine includes one or more trip drive for driving the knotter drive shaft and one or more power-off actuators for disconnecting power to the one or more trip drive. In practice as described herein the baling machine preferably includes at least two such power-off actuators disposed to be respectively accessible to an operator positioned on the left-hand side or the right-hand side of the baling machine.

Such an arrangement ensures that essentially regardless of the direction from which an operator approaches the baling machine it is possible quickly and safely to de-power the trip drive that causes engagement of the knotter shaft drive.

Further preferably the baling machine includes a pre-baling chamber in which a pre-baling mechanism collects plant matter for feeding in to the bale-forming chamber, the pre-baling chamber including one or more plant matter feeding sensors for generating one or more signals indicative of feeding of plant matter in to the bale-forming chamber.

Preferably the one or more plant matter feeding sensors includes an electrically and/or magnetically conductive element that moves in co-ordinated fashion with feeding of plant matter to the bale-forming chamber and a detector that is capable of generating one or more signal based on movement of the electrically and/or magnetically conductive element. In particularly preferred embodiments the electrically and/or magnetically conducting element is or includes a stuffer tine that is moveable in the pre-baling chamber, or includes a further element secured to such a stuffer tine.

Alternatively the plant matter feeding sensor may take a variety of other forms.

It also is preferable that the baling machine includes one or more plunger position sensor for generating one or more signal indicative of positioning of the plunger at a point in its reciprocation furthest from the location at which the one or more needles penetrate the bale-forming chamber.

The one or more plunger position sensor if desired may form part of a more extensive sub-system for generating signals that indicate the plunger position, or may exist independently. One beneficial purpose of such sensors is to ensure that on generation of a command requiring halting of operation of the baling machine because of a fault or failure in the twine dispensing/delivery and/or knotting operations the plunger is brought to rest in a location that permits maximal access to the needles and/or knotters and their associated drives.

In common with certain prior art baling machines the cyclic needle drive of embodiments as described herein optionally may include one or more shear fasteners intended to shear on the load on a said needle exceeding a threshold value and disengage the cyclic needle drive, an output or absence of output of the brake disc sensor indicating shearing of the one or more shear fasteners and the one or more control devices on sensing of such shearing commanding a fault response.

The commanded fault response may include one or more of:
a) activating a brake to brake movement of the plunger and/or;
b) generating an alert message indicative of a fault condition.

The alert message when generated may be displayed e.g. by way of one or more display devices in the operator's cab of a towing tractor; it may give rise to an audible or other human-perceptible alert; and/or it may give rise to generation of a transmitted signal to for example a farm office or a baling machine service centre. In this regard many modern agricultural machines include communications equipment that is capable of communicating wirelessly with remote locations. Such communications equipment may readily be employed in signal transmission as outlined, and the methods of doing so are familiar to the person of skill in the art.

However as will occur to those of skill in the art the ability deriving from the presence of two clutches, each activated by the trip drive motor, to decouple the cyclic needle drive from the motion of the knotter shaft means that in some embodiments the shear fastener referred to above may be dispensed with. Instead the step of decoupling the cyclic needle drive can serve a similar purpose to shearing of a shear fastener, but without the attendant disadvantages that arise when it becomes necessary to replace the shear fastener.

It is possible to add one or more sensors of the statuses of the parts of the baling machine that cause decoupling of the cyclic needle drive. The outputs of such sensors, which may also be provided if desired in embodiments in which one or more shear fasteners is retained, can be used to cause the generation of one or more fault responses as exemplified above. As a non-limiting example in this regard, if as is preferred the decoupling action is effected by a secondary clutch mechanism, one or more sensors may sense the torque experienced by such a mechanism and cause operation of the secondary clutch mechanism to decouple the cyclic needle drive when the detected torque attains or exceeds a threshold value.

Preferably the baling machine includes a plunger brake that is operable to halt motion of the plunger; and the one or more control devices on operation of the plunger brake may cause, in dependence on one or more signals generated by the one or more plunger position sensors, halting of the plunger at a said point in its reciprocation furthest from the location at which the one or more needles penetrate the bale-forming chamber.

Such an effect may be achieved for example when the one or more control devices is programmable and is programmed to halt the plunger as specified. However a similar beneficial effect also may be achieved using non-programmable control means such as but not limited to one or more logic circuits.

For the avoidance of doubt the one or more control devices may be or may include a programmable device and/or a logic circuit.

### Brief Description of the Drawings

There now follows a description of preferred embodiments, by way of non-limiting example, with reference being made to the accompanying drawings in which:
Figure 1 is a schematic representation of a tractor-baling machine combination in accordance with embodiments described herein;
Figure 2 is a perspective view of part of a baling machine as schematically illustrated in Figure 1, showing a knotter drive shaft and knotters mounted thereon;
Figure 3 is a side elevational view of the Figure 2 apparatus;
Figure 4 shows an openable shield forming part of an embodiment and that is omitted from Figures 2 and 3;
Figure 5 is a perspective view showing the general arrangement of a mechanism, forming part of an embodiment described herein, giving rise to separate, clutch-controlled actuation of a knotter mechanism and a needle drive;
Figure 6 shows in perspective view from above some detail of the knotter mechanism;

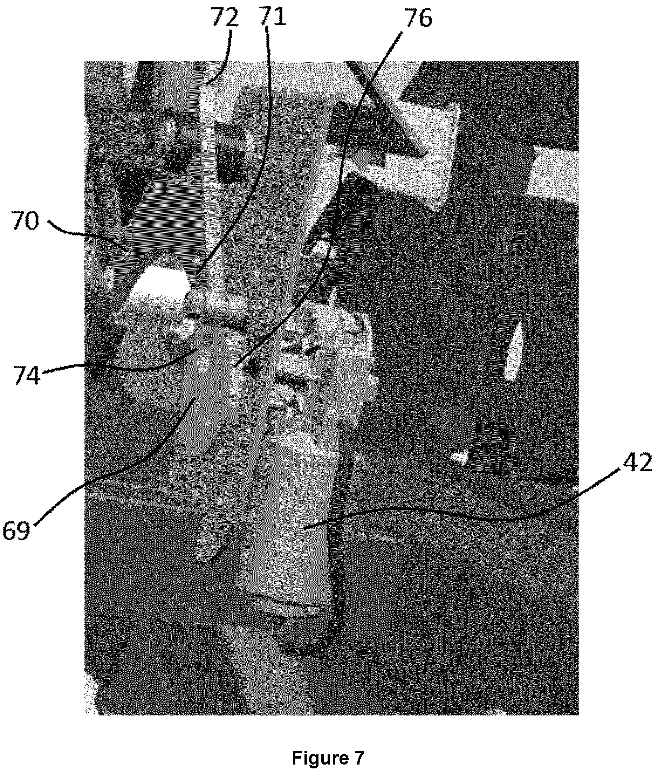

Figure 7 is a perspective view enlargement showing detail of a trip drive motor and follower yoke forming part of one embodiment described herein;
Figure 8 is a perspective view of one embodiment of baling machine as described herein, showing *inter alia* the location of a series of fans;
Figure 9 is an enlargement of part of the Figure 8 baling machine, after opening of a fan shield that normally prevents access to the fans; and
Figure 10 is a perspective view showing in detail the fan shield together with a star wheel encoder that is positioned so as to protrude into a bale-forming chamber of the baling machine; and an associated sensor.

### Detailed Description of the Drawings

Referring to the drawings a baling machine 10 is shown being towed behind a towing vehicle that in the illustrated embodiment non-limitingly is an agricultural tractor 11.

The tractor 11 is a conventional tractor including a vehicle frame/body 11a, rear-mounted cab 11b, front, steerable, ground-engaging wheels 11c and rear, driven, ground-engaging wheels 11d. Tractor 11 includes at its rear end between the rear wheels 11d a power take-off (PTO) 12 of a conventional design that includes a rotative coupling for a PTO shaft 13 that extends rearwardly of the tractor 11. The PTO 12 may be engaged to cause rotation of the PTO shaft 13 or disengaged, such that the shaft 13 is not powered to rotate, for example through the operation of a control lever or pushbutton.

The tractor 11 may have any of a range of engine power outputs including but not limited to 200 hp, 300 hp and 400 hp. The baling machine 10 is operable when towed by virtually any tractor 11.

The PTO shaft 13 may be any of a variety of lengths. A relatively short PTO shaft 13 and drawbar 14 (described below) minimises the distance between the pick-up 19 (described below) of the baling machine 10 and the tractor 10. This provides certain advantages, although in some other respects a longer PTO shaft 13 may provide good adjustment flexibility.

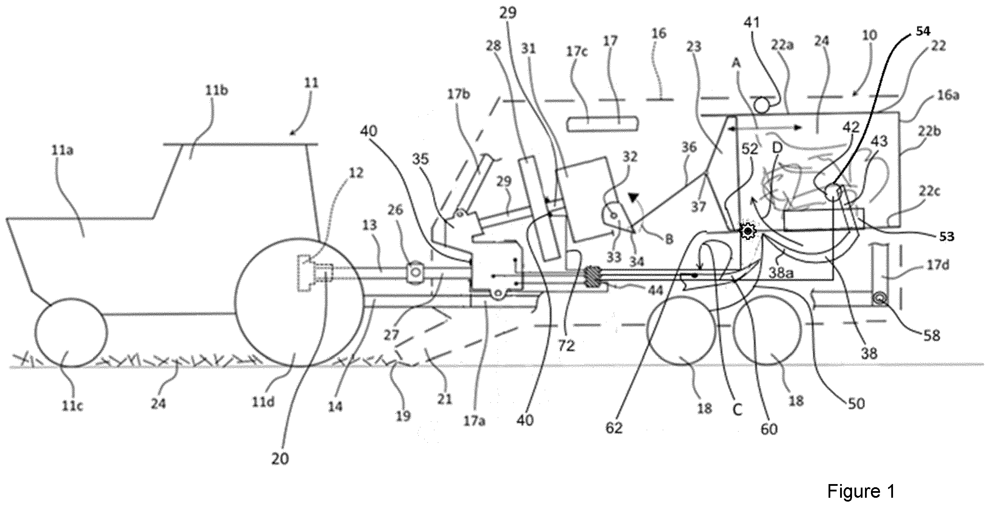

The partial driveline represented by the PTO 12 and PTO shaft 13 may in various types of tractor include a PTO clutch 20 that seeks to protect the engine of the tractor 11 from damage caused e.g. when an excessive loading on the PTO shaft causes engine stalling. The PTO clutch 20 is shown schematically in Figure 1. It may readily be envisaged by the person of skill in the art and typically would be a one-way clutch of a kind that permits free movement when rotating in one direction, and transfers rotary drive via the PTO shaft 13 when rotating in the opposite direction. Other forms and locations are possible in respect of the clutch 20 than the type and position schematically shown in Figure 1.

The baling machine 10 is secured to the rear of the tractor 11 by way of a drawbar 14 that typically is of an "A"-shape when viewed in plan and extends forwardly of the baling machine 10 below the PTO shaft 13. The drawbar 14 is pivotably secured to a conventional towing hitch at the rear of the tractor 11.

The baling machine 10 includes a housing or cover 16, shown in dotted lines, that may take a variety of forms. The housing 16 in most baling machine designs includes a section 16a that is open to permit ejection of formed bales at the rear of the baling machine 10.

Panels defining the housing 16 further may be openable or removable in order to permit maintenance of the interior parts of the baling machine 10 and replacement of bobbins of twine used for tying completed bales or the clearance of blockages that can arise for a variety of reasons.

The housing 16 of the baling machine 10 is secured to a baling machine frame 17 selected parts 17a, 17b, 17c, 17d of which are illustrated in Figure 1, with the complete frame 17 being omitted for ease of illustration.

The baling machine 10 is mobile and to this end it includes secured to the frame 17 two or more ground-engaging wheels 18.

In the embodiment illustrated four wheels are provided, being left and right front wheels and left and right rear wheels 18. In Figure 1 the left-hand side front and rear wheels are visible.

In this regard the front or forward end of the baling machine 10 is the end of it that is closest to the towing tractor 11. The terms *"rear", "left", "right", "upper", "lower"* and derivative terms are interpreted accordingly and as though an observer is looking forwardly along the baling machine 10.

The wheels 18 may be mounted relative to the frame 17 by way of suspension components and passive or active steering components as would be known to the person of skill in the art, or they may be mounted more simply. The wheels 18 optionally may include tyres and/or gripping elements that are omitted from Figure 1 for ease of viewing.

A pick-up 19 projects forwardly of the baling machine 10 and is arranged to collect cut plant matter 24 lying in a field in which the baling machine 10 moves as influenced by the motion of the tractor 11. The pick-up 19 passes the plant matter to a conveyor 21. The conveyor 21 conveys the plant matter inside the baling machine 10 where it undergoes baling.

Numerous designs of pick-up 19 and conveyor 21 are known in the baling machine art and fall within the scope of embodiments disclosed herein. The precise designs of the pick-up 19 and conveyor 21 are essentially immaterial to the nature and operation of the invention, and therefore are not described in detail.

As mentioned, the baling machine 10 includes an internal bale-forming chamber 22. This is an elongate, cuboidal volume defined by chamber walls of which top and bottom walls 22a and 22c are visible in Figure 1. The bale-forming chamber 22 in a typical baling machine design extends in a fore and aft direction in an upper part of the rear of the volume enclosed by the housing 16.

The rear 22b of the bale-forming chamber is open and coincides with the aforementioned open housing section 16a in order to allow ejection of completed bales in a *per se* known manner.

A crop flow path exists inside the baling machine 10 between the conveyor 21 and the bale-forming chamber 22. The crop flow path may readily be envisaged and is shown only schematically in Figure 1.

The forwardmost end of the bale-forming chamber 22 is essentially open. A plunger 23 occupies the interior cross-section of the bale-forming chamber 22 and is constrained to move longitudinally inside the chamber 22 from the open, forward end towards and away from the rear 22b as signified by arrow A.

The PTO shaft 13 as mentioned may be powered to rotate, in virtually all tractors in a clockwise direction when viewed from behind the tractor 11. PTO shaft 13 is connected by way of at least one, and in practice two, universal joint 26 to the forwardmost end of a rotary input shaft 27 of the baling machine 10. The universal joint(s) 26 in a well-known manner accommodate changes in the relative height and orientation of the tractor 11 and baling machine 10 that result from towing of the baling machine from place to place, e.g. while the baler is working or when it is travelling between fields.

The input shaft 27 is supported e.g. using journal bearings that are omitted from Figure 1 for ease of viewing and connects by way of a driveline, described in more detail below, to a rotatable flywheel 28.

Flywheel 28 is supported on a flywheel shaft 29 that also is supported using journal bearings, or a functionally similar arrangement, that further is omitted from Figure 1. The main function of the flywheel 28 is to smooth the reciprocations of the plunger in a manner minimising peak forces needed to effect plunger movement.

The rear end of the flywheel shaft 29 is a rotary input to a drive converter in the form of a main transmission 31 or similar sub-system that by way of intermeshing gear components alters the axis of rotation of rotative energy in the baling machine 10.

The nature of the main transmission 31 thus is such that the longitudinally extending (with reference to the elongate length of the baling machine 10 as illustrated) axis of rotation of the flywheel shaft 29 becomes rotation about a transversely extending axis of a crankshaft 32.

Crankshaft 32 is drive-transferringly connected as shown to a crank member 33 that protrudes from the main transmission 31 in a manner presenting a free end 34. The free end 34 is pivotably connected to one end of a conrod 36 the other end of which is pivotably connected, as indicated by numeral 37, to the forward side of the plunger 23.

As is apparent from Figure 1 therefore, rotation of crankshaft 32 causes rotation of crank 33, as signified by arrow B, that gives rise to the rectilinear, reciprocal motion of plunger 23 indicated by arrow A.

In this regard it is somewhat arbitrary whether crank 33 rotates clockwise or anticlockwise, since reciprocal motion of the plunger 23 may in an appropriately designed set of driveline elements be achieved regardless of the direction of rotation of the crank 33. The actual rotational direction of the crank 33 would be a consequence of the internal design of the main transmission 31. Such aspects are not relevant to an understanding of the invention, and therefore are not described in detail herein.

Charges of plant matter 24 conveyed inside the baling machine 10 from the conveyor 21 repeatedly are at intervals fed by a stuffer 60 from a pre-baling chamber 50 into the interior of the bale-forming chamber 22 for compaction by reason of the reciprocal, rectilinear motion (arrow A) of the plunger 23.

Motion of the stuffer 60 is approximately represented schematically by arrow C. The baling machine includes a mechanism that gives rise to this form of movement of the stuffer 60.

The feeding of each charge of plant matter 24 is timed to coincide with positioning of the plunger 23 at its retracted (i.e. forwardmost) position, with the result that the plant matter 24 becomes compressed and compacted by the movement of the plunger 23 into bale form after it has been fed in to the bale-forming chamber 22.

The driveline defined between the input shaft 27 and the flywheel shaft 29 includes an optional transmission 35 the purpose of which is to match the torque input via the input drive shaft 27 to the load requirement represented by the resistance to motion of the plunger 23. Precise details of the transmission 35 are not relevant to embodiments described herein.

A control device that in the illustrated embodiment is a microprocessor 44, but that as noted could take a variety of other forms, is connected to various sensors as illustrated schematically and/or in terms of approximate or typical location in the figures to sense conditions in various parts of the driveline and crop flow path described above. Microprocessor 44 also may be connected for sensing and command purposes as described herein. Additionally or alternatively one or more further control devices, that also may take any of a variety of forms, are possible.

Exemplary, non-limiting arrangements of sensors that are connectable to such a control arrangement are described herein.

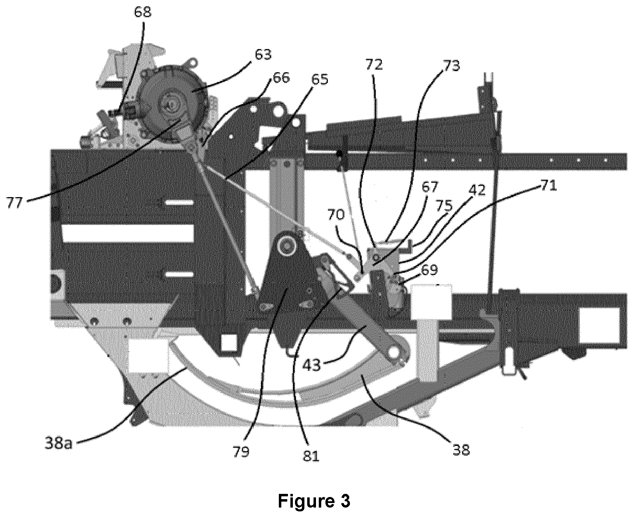

The baling machine 10 includes a knotter and needle combination. This takes the form of one or more needles 38, and in practice an array of several needles side by side, of which one needle 38 is visible in Figures 1 and 3. In the illustrated embodiment six needles 38 are provided in the array, and the number of knotters 39 (described below) with which they co-operate is the same, i.e. six. In other embodiments the numbers of needles and knotters may differ from the foregoing.

Each needle 38 may be of a conventional design, being of an arcuate, claw-like shape that tapers towards a narrow, free end 38a. This end 38a of the needle 38 defines an eye through which twine dispensed from a twine box is entrained.

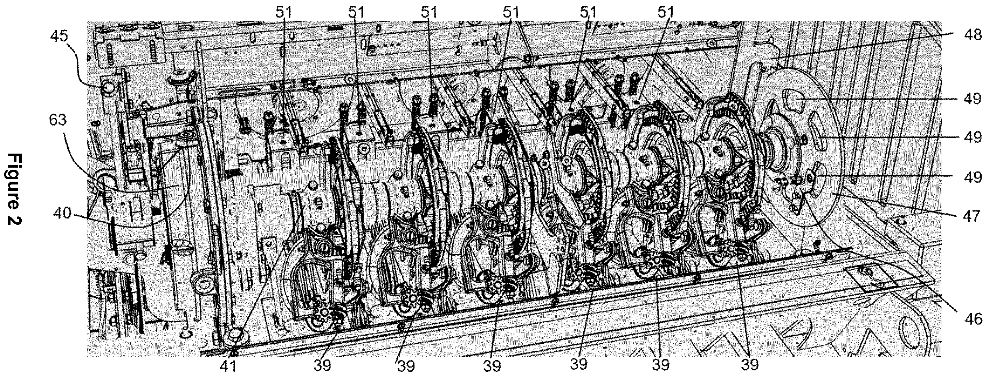

The needles are pivotably mounted by way of a cyclic needle drive that when activated causes motion of the needles about respective arcuate paths approximately indicated by arrow D. As a result the needles 38 from time to time to penetrate the bale-forming chamber 22 during operation of the baling machine. This in turn causes the entrained twine to be lifted upwardly up the side of a bale to a location adjacent a series of knotters 39 (Figure 2) that as mentioned correspond in number to the number of needles 38.

Movement of the needles 38 is effected by way of a cyclic needle drive mechanism that in Figures 2 and 3 includes a trip drive motor 42 and a pivotable support shaft 43 that is reciprocably moveable in a locus giving rise to the motion indicated by arrow D and a return motion that is the reverse of arrow D. Tripping of the trip drive motor 42 initiates and terminates reciprocating motion of the needles 38. The needle motion occurs by reason of temporary connection of the support shaft 43, as a result of activation of the trip drive motor 42, to rotary drive that is fed to a knotter gearbox 63 described below.

The trip drive motor typically is an electric motor, operating under control of a control device such as but not limited to microprocessor 44. Thus selective engagement of the trip drive motor is provided for.

As is well known the knotters 39 catch the lengths of twine that, as mentioned above, by reason of the action of the needles 38 is formed into double twine lengths in the vicinity of the knotters.

The knotters 39 are mounted on a knotter shaft 41 that is powered to rotate. A series of cam and worm gear arrangements that are drivingly connected to the knotter shaft 41 cause the knotters 39 each to execute a complex locus when the twine is adjacent and thereby define a doubled twine loop through which a doubled length of twine is pulled to form each knot.

As explained herein the cyclic needle drive mechanism and the knotter shaft 41 in prior art arrangements are normally powered via a common source of drive, but the arrangement of the invention permits them to be controlled separately. Such controlling could amount to complete decoupling of the motions of the cyclic needle drive mechanism; or it could amount to partial decoupling such that the timing of operation of the cyclic needle drive mechanism can be adjusted relative to operation of the knotter shaft 41.

These effects could within the scope hereof be achieved e.g. through the provision of respective electric motors driving the knotter drive shaft and the needle drive mechanism and electrically connected to be independently controlled by the one or more control devices such as microprocessor 44.

However in the embodiment illustrated in the drawings an optional alternative approach is adopted such that independence of control of the needles and the knotters is achieved more economically. This is through the inclusion of the trip drive motor 42 in combination with a pair of clutches, which arrangement differs from a conventional baler knotter and needle drive in which the drives for these sub-systems are permanently linked.

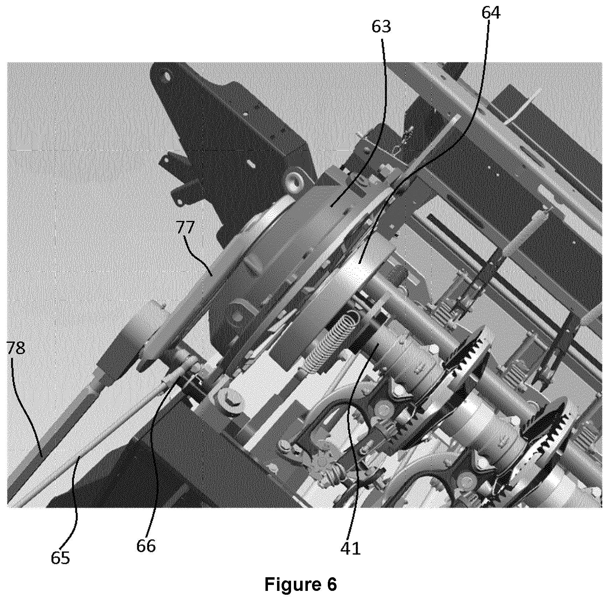

In more detail the knotter shaft 41 includes mounted at one end in the illustrated embodiment (although other locations relative to the shaft 41 are at least theoretically possible) a knotter gearbox 63 that is coupled to an adjacent knotter clutch 64 (Figure 6) such that rotary output of the knotter gearbox transfers via the knotter clutch 64.

The knotter clutch 64 is mounted on the knotter shaft 41 *"inboard"* of the knotter gearbox 63, although the precise location of the clutch may be varied within the disclosure hereof. Rotary output from the knotter gearbox 63 may selectively, depending on whether the knotter clutch 64 is engaged or disengaged, transmit via the knotter clutch 64 to rotate the knotter shaft 41 and cause the knotters 39 to perform the knot-forming locus described above.

An actuator rod 65 is at an upper end pivotably connected to a clutch actuator 66. Movement of the actuator rod 65 selectively causes the actuator 66 to effect engagement or disengagement of the knotter clutch 64.

At its lower end actuator rod 65 is pivotably connected to a first arm 70 of a three-limbed follower yoke 67 that is pivotably mounted adjacent and drivingly connected to the trip drive motor 42. The trip drive motor 42 as mentioned preferably is such that when commanded by way of e.g. a software command generated by the processor 44 it executes a 360° rotation that in turn causes reciprocal movement of the actuator rod 65, thereby causing the knotter clutch 64 to change status, for a period corresponding to a knot-forming cycle of the knotters, from a disengaged condition to an engaged one.

Such movement of the follower yoke 67 results from the effect of a cam disc 69 that is fixed to the output shaft of the trip drive motor and that is engaged by a follower arm 71 being a second arm of the follower yoke. A third arm 72 of the follower yoke 67 is attached by a biasing spring 73 to a fixed mounting bracket 75. As a result of tension in the spring 73 caused by such attachment the follower arm 71 is pressed to bear on the outer periphery of the cam disc 69 such that the follower arm 71 faithfully follows the profile of the outer periphery.

The outer periphery of cam disc 69 includes a relatively short, flattened portion 74 that enlarges in diameter to define a constant-radius dwell portion 76 that exists over the major part of the outer periphery.

When the trip drive motor 42 is inactive the follower arm bears against the flattened portion 74 with the consequence that the actuator rod 65 is retracted relative to the knotter clutch 64.

When the trip drive motor 42 is caused to describe a 360° rotation as explained the follower arm 71 is forced to move outwardly, overcoming the bias provided by spring 73, to bear on the dwell portion 76 of the outer periphery. By reason of the constant-radius nature of the dwell portion 76 the follower arm 71 remains at this position for most of the rotation of the cam disc 69, until nearly the end of the 360° rotation (at which point the follower arm 71 re-engages and again bears upon the flattened portion 74).

The knotter gearbox 63 includes as an input a rotary shaft 68 that is powered by the rotary drive within the baling machine 10 to rotate at a fixed speed. Operation of the knotter clutch selectively connects this rotary drive to and disengages it from the knotter shaft 41.

While the follower arm 71 bears on the dwell portion 76 of the cam disc outer periphery the actuator rod 65 is advanced relative to the knotter clutch 64, causing such engagement of the knotter clutch 64 and, therefore, rotation of the knotter shaft 41 for a fixed period that is initiated by the cam dwell and continues, as a result of the design for the knotter clutch 64, for most of a single 360° rotation of the knotter shaft. This is sufficient for the required knot-forming action. Since the trip drive motor 42 rotates in increments of 360° the follower arm 71 always will finish a rotation of the cam disc 69 bearing on the flattened portion 74 of the outer periphery, ready for the next rotation of cam disc 69 when it is subsequently required by the installed control software to activate the knotter shaft 41.

In summary therefore the components are such that on activation of the trip drive motor 42 the knotter shaft is caused to rotate for a discrete (major part of 360° of rotation) period initiated by engagement of the arm 71 with the dwell portion 76 of the cam disc 69.

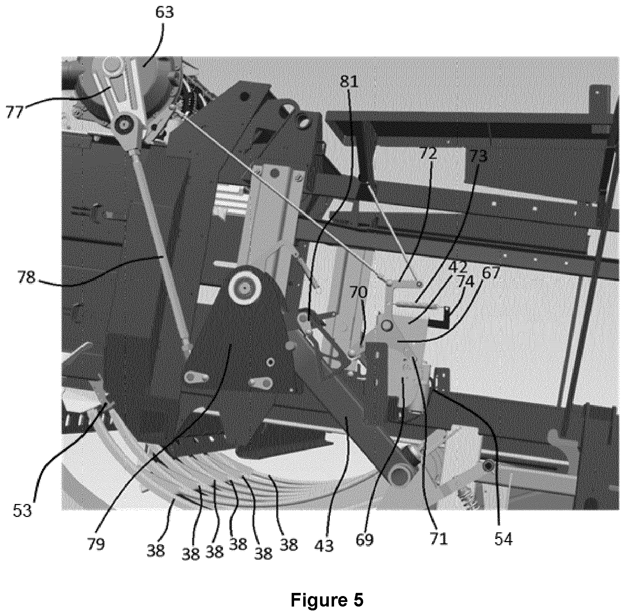

A portion of the knotter shaft 41 protrudes on the opposite side of the knotter gearbox to that on which the knotters 39 are mounted. This shaft portion is rigidly coupled to a crank member 77 an otherwise free end of which, that is remote from the knotter shaft 41, is pivotably coupled to one end of a needle activator rod 78 (Figure 5). The other end of needle activator rod 78 is pivotably secured to one apex of a triangular Pitman arm-type link member 79 mounted for rotational movement at a location near the trip drive motor 42. Link member 79 is pivotably fixed at an apex remote from the needle activator rod 78 to a frame member of the baling machine 10. Support shaft 43 is linked via a second clutch mechanism 81 to the link member 79.

It will be apparent therefore that when the trip drive motor rotates as described above this also initiates rotation, that preferably is most of 360° of rotation, of the crank member 77. In turn this draws the link member 79 in an arcuate path the energy of which is transferred to the support shaft 43, thereby causing the needles 38 to describe the twine guiding motion exemplified by arrow D in Figure 1 and subsequently execute a reverse motion so that the needles 38 return to the initial position illustrated.

The second clutch mechanism 81 permits (a) selective decoupling of motion of the needles 38 from the motion of the knotters and/or (b) timing adjustments to be effected, for example to take account of wear in the needle drive mechanism, particular twine characteristics and/or particular crop types and conditions. In particular the needles 38 may easily and with simple adjustments continue to be correctly timed relative to reciprocal motion of the plunger, thereby minimising the risk of collisions of the needles 38 with the plunger 23 even when component wear otherwise would cause potential needle collision problems.

Hence the arrangement is such that it is possible to drive the knotters and the needles simultaneously based on the rotation of the input rotary shaft 68; but when desired the drive to the needles may readily be decoupled and/or adjusted in timing relative to the knotter operation, in a manner overcoming the drawbacks of the prior art explained above and also permitting straightforward re-engagement of the cyclic needle drive when this is again required. In particular in addition to the ability to compensate for component wear by adjusting, through use of at least the second clutch mechanism 81, the timing of the needle motion relative to the knotter activation, the arrangement of the invention in further embodiments permits omission of the shear bolt explained above for decoupling the needle drive in the event of a fault situation arising. Instead in such a situation the second clutch mechanism 81 can designed to be disengageable in the event of sensing of a fault; and the cyclic needle drive can, through re-engagement of the second clutch mechanism 81, be readily re-coupled to the knotter drive shaft motion when required. Such re-engagement can be effected without the inconvenience and risks of having to replace a shear bolt, once the fault condition has been rectified and it is again safe for the needles 38 to move in synchronism with the remainder of the described parts.

The baling machine 10 includes at least one sensor, and in practice a number of sensors, for sensing conditions in the baling machine and generating one or more signals indicating prevailing conditions. The control device(s) can control motion of the needles 38 and action of the knotters 39 in dependence on the sensed conditions and/or operational statuses of parts of the baling machine. In particular the control device(s) can activate and/or deactivate one or more sub-systems of the baling machine in dependence on the sensed conditions and/or operational status.

Preferred arrangements of sensors are illustrated, in some instances schematically, in the figures and include the sensor and control elements summarised in Table 1 below. The functions of the various sensors, etc., are summarised in the table. Further descriptions of some of the sensors, etc., are given herein.

**Table 1: Summary of Sensors and Related Components**

| **Sensor Reference Number in Drawings** | **Description/Function** |
|---|---|
| 40 | Reference PTO shaft speed |
| 45 | Knotter fan/shield open sensor - detects whether the fan shield described below is open |
| 46 | Knotter brake disc motion sensor |
| 51 | Knotter mis-tie sensors - sense twine breakage in the knotters |
| 52 | Star wheel encoder for measuring bale length |
| 53 | Needle yoke up sensor - detects raising of at least one needle in accordance with the described motion. |
| 54 | Needle trip drive sensor - senses activation of the needle trip drive motor |
| 56 | Knotter/fan shield over-ride button - permits knotter operation when fan shield is open |
| 57 | Fan motor sensors - sense the operational statuses of the knotter fans |
| 58 | Knotter power-off button LHS - permits switching off of knotter power from outside the left-hand side of the baling machine; a similar button performs a similar function on the right-hand side of the machine. |
| 62 | Plunger position sensor - senses when plunger 23 is at the forwardmost extremity of its reciprocal movement |

Rotational shaft speed sensors 40 are shown in Figure 1 in each of two possible locations, being respectively on the input shaft 27 and on the flywheel shaft 29. When located in either of these positions the shaft speed sensor may send a reference speed signal to the microprocessor 44. A further option is to provide a shaft speed sensor 40 that is positioned to measure the rotational speed of the knotter gearbox input rotary shaft 68. Since shaft 68 is mechanically coupled to the PTO shaft the output of such a sensor can additionally or alternatively be used to derive the PTO rotational speed.

The resulting PTO speed signal(s) may be used to determine aspects of the control of the parts of the baling machine described herein. Also the output of the one or more sensor 40 is/are used to determine the angle of the crank 33 since the sensor 40 produces a pulse train whenever baling operation is selected.

Adjustment of the output of a sensor such as the sensor(s) 40 is possible. As an example, if the speed of the input shaft 27, which is the same as the rotational speed of the PTO shaft 13, is relatively low the microprocessor might adopt a relatively low sensor sampling frequency and thereby reduce its computational overhead; whereas if the speed of the shaft 27 is relatively high a higher sampling rate may be used because it then is necessary for the sub-systems of the baling machine 10 to react more quickly to sensed, prevailing conditions in order to avoid faults and errors.

Similar determinations apply if the rotational shaft speed sensor 40 is located to sense the speed of the flywheel shaft 29 or the rotary input shaft 68, although in that case an additional compensation may be required to take account of the transmission ratio prevailing in the transmission 35 or the other parts of the rotary drive train connecting the rotary input shaft 68 to the PTO shaft 13.

The knotter shaft 41 includes at one end a brake disc 47 that rotates with the knotter shaft 41 and can be braked through the action of a knotter shaft brake 48, which latter also acts under the control of a control device (i.e. microprocessor 44 in the illustrated embodiment which generates appropriate software commands, although as noted numerous alternatives to microprocessor 44 are possible). The brake disc 47 includes a series of annularly regularly spaced perforations 49. These operate in conjunction with a brake disc sensor 46 described below to determine whether the knotter shaft is rotating and hence whether the knotters 39 are active.

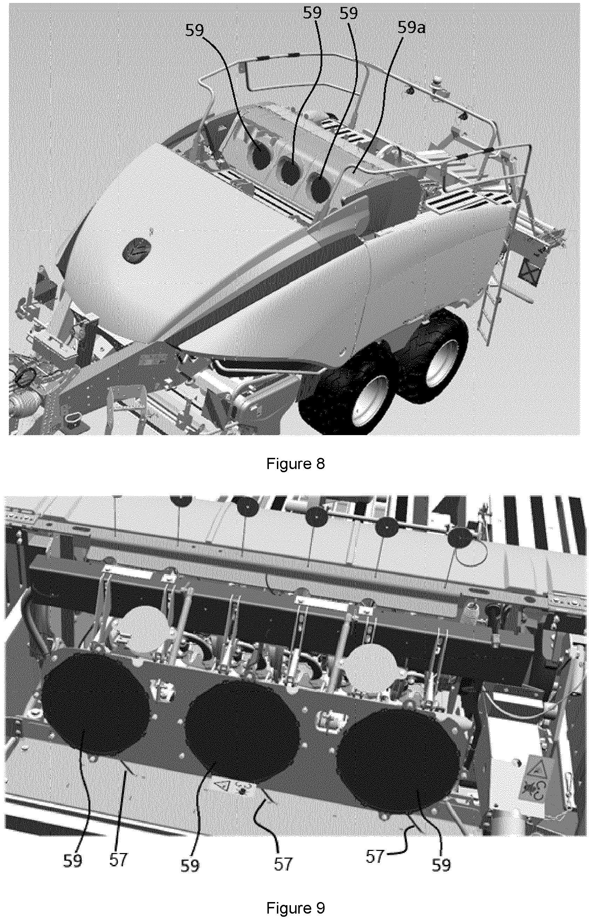

The baling machine 10 includes one or more fans behind respective fan grilles 59 as shown in Figures 8 (showing a fan cowl 59a) and 9 (that for clarity omits the fan cowl 59a).

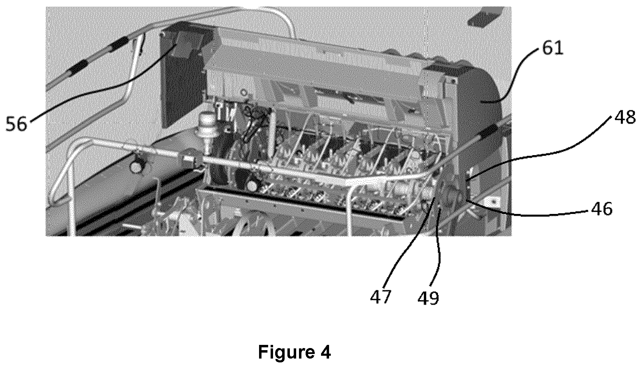

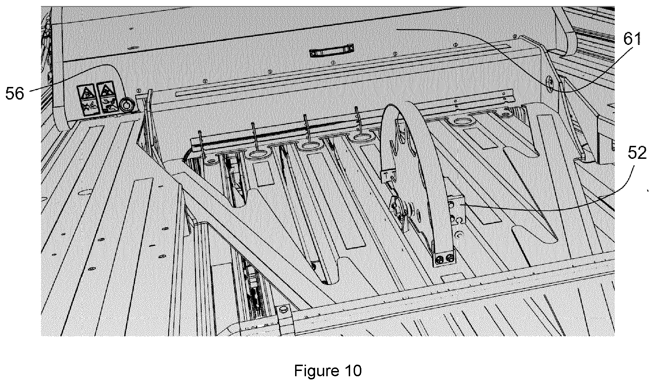

As explained the fans blow twine strands, plant matter and dust away from the knotters 39. A knotter/fan shield 61 (Figures 4 and 10) is pivotably openable and closable in the vicinity of the knotters 39. The knotter/fan shield 61 when closed prevents manual access to the knotters and the fans when these are operational.

Opening of the knotter/fan shield 61 by (in the illustrated embodiment) pivoting it upwardly causes the knotter/fan shield open sensor 45 (Figure 2) to generate a signal, that is transmitted e.g. by wiring to the control device such as microprocessor 44, that is indicative of the open status of the shield 61. Detection of this signal at the control device 44 causes the latter to generate and transmit a command that inhibits engagement of the knotter shaft trip drive motor 42. In the illustrated embodiment if opening of the knotter/fan shield is attempted after the knotter trip drive motor has been tripped the initiated operational cycle of the motor completes before the motor 42 becomes depowered. An interlock may be provided to prevent opening of the fan shield until the trip drive motor 42 has finished its operational cycle and becomes depowered.

In the depowered condition resulting from transmission of such a command the trip drive motor 42 cannot be re-activated unless either the shield 61 is re-closed; or a knotter/fan shield over-ride button 56 (Figures 4 and 10) is operated. The design and/or programming (in the case of a programmable device such as microprocessor 44 being provided) of the control device are chosen in order to give effect to this requirement in preferred embodiments.

Knotter fan/shield over-ride button 56 if present permits powering of the knotter shaft 41 and fans even when the shield 61 is open. This is potentially useful when for example checking operation of the baling machine after maintenance or following clearing of a fault or blockage.

The over-ride button 56 is located inside the region that is obscured by the shield 61 when the latter is closed. Consequently it is difficult or impossible to press the over-ride button accidentally since it is necessary to reach inside the shield before over-riding of the condition resulting from a signal generated at sensor 45 becomes possible.

One or more fan motor sensors 57 (Figure 9) sense when the one or more fans are operational, and generate signals indicative thereof. These too are transmitted e.g. by wiring to the control device (microprocessor 44 in the preferred embodiment), which monitors operation of the one or more fans and generates one or more signals indicative of fault conditions or fan failure modes that might arise. In such a situation remedial action, such as de-powering of the fans or the generation of an operator-detectable alert, can be commanded.

As noted the brake disc sensor 46 indicates whether the knotter shaft 41 is rotating. This is achieved by treating the brake disc 47 as akin to a rotary shaft encoder. Thus the brake disc 47 includes formed therein an equiangularly spaced series of through-going apertures 49. On rotation of the brake disc these sequentially pass the brake disc sensor 46 and generate therein pulses corresponding to the transitions between the material of the brake disc 47 and the apertures 49.

The brake disc sensor may be e.g. an electrical or capacitive sensor that generates electrical signals corresponding to the mentioned transitions, or an optical or other sensor that functions similarly. The output of the brake disc sensor 46 may usefully be employed by the control device to indicate whether activation of the knotter drive has occurred.

The sensors 51 (Figure 2) determine whether the twine has broken or become jammed (typically because of mis-tying of a knot) in any of the knotters 39 and generate e.g. electrical signals indicative thereof. Such signals are transmitted to the control device e.g. via wiring. The control device can initiate remedial steps, such as the generation of a broken twine alarm that is audible and/or visible to the tractor operator. The tractor operator then can terminate current baling operations and repair the twine break or twine jam.

A bale length-measuring wheel in the form (in the non-limiting embodiment shown) of a star wheel encoder 52 rotates as each bale is formed, in a *per se* known manner. The star wheel encoder 52 includes one or more signal-generating sensor the output of which is transmitted (e.g. through wiring as illustrated) to the microprocessor 44.

In Figure 1 the star wheel encoder 52 is schematically shown secured protruding upwardly into the bale-forming chamber 22 via an aperture in lowermost wall 22c. In Figure 10 the star wheel is shown in an alternative position protruding downwardly into the bale-forming chamber from above, via an aperture in the upper wall 22a. Other locations for this component also are possible, depending on the precise design of the interior of the baling machine 10.

The operator of the tractor 11 may input via an input device a command to the microprocessor indicating a preferred bale length.

The star wheel encoder 52 rotates as a bale moves along the bale-forming chamber 22 during its formation. As a result an input to the microprocessor 44 is a signal that is proportional to the length of a formed bale. This signal may be used in accordance with the logic of the microprocessor 44 to determine the time at which a needle drive cycle and knotter operation must be initiated and hence (a) the trip drive motor 42 activated and (b) if needed, the second clutch mechanism 81 used to delay the start of movement of the needles 38 to ensure correct co-ordination with movement of the plunger 23. The needle and twine knotting operations then are initiated in dependence on the selected bale length, when the star wheel encoder 52 indicates that a bale of the chosen length has been formed.

Once a bale has been tied as a result of operation of the needles 38 and knotters 39 its longitudinally forwardmost end defines a surface in the bale-forming chamber 22. Compaction of subsequent charges of plant matter inserted into the bale-forming chamber 22 by the stuffer 36 may take place against this surface through further reciprocal longitudinal movement of the plunger 23, as is well-known in rectangular baling machine designs. In this way forming of a further bale commences without interruption after the application of twine to the formed bale. The tied bale is gradually pushed out of the rear of the bale-forming chamber 22 during this process, until it falls from the rear 22b of the bale-forming chamber 22 onto the ground behind the baling machine 10.

As mentioned the knotter shaft 41 is caused to be driven as a result of operation of trip drive motor 42. The baling machine includes at least one power-off actuator in the form of a push-button 58 that when pressed ensures that the trip drive motor 42 cannot be provided with power.

Push-button 58 is shown in Figure 1 secured to the machine frame 17 in an arbitrary, non-limiting location on the left-hand side of the baling machine 10. In practice a second such button is located at a counterpart location on the opposite side of the baling machine 10. As a consequence it is possible for an operator wishing to perform maintenance and/or blockage clearing operations to ensure that the knotter is de-powered regardless of the direction from which the operator approaches the baling machine 10.

This is a significant safety advantage of the baling machine 10 over the prior art. Baling machines typically are large pieces of equipment and operators can be reluctant to walk to only a single location on the baling machine to effect a safety measure such as de-powering the knotter shaft 41. The provision of multiple, conveniently located power-off actuators minimises the risk of failure to comply with a safety protocol before work is commenced inside the baling machine 10.

The pre-baling chamber 50 includes a plant matter feeding sensor. In one embodiment this may be constituted by one of the tines of the stuffer 36 in conjunction with e.g. a capacitive, Hall-effect or similar sensor that is omitted from the drawings but that may be positioned close to the stuffer tine in question when it is in a retracted position.

The sensor may generate a signal the amplitude of which is proportional to the proximity of the stuffer tine to it. As a result movement of the stuffer tine away from its retracted position, i.e. when feeding a charge of plant matter from the pre-baling chamber 50 into the bale-forming chamber 22, may give rise to signals that are interpretable by the microprocessor 44 in a manner beneficially influencing the commands generated in the baling machine 10. An advantage of the output of the stuffer tine sensor is that it consistently produces a level transition at the same point in the machine cycle.

Variants on such a sensor mechanism may be provided in the alternative. As a non-limiting example the Hall effect sensor could be located close to the position of the stuffer tine when it is advanced for the purpose of feeding plant matter.

One or more features, such as an electrically or magnetically conductive protuberance, may be secured to the stuffer tine in order to maximise the reliability of signal generation.

A plunger position sensor 62, that may be e.g. a capacitive or Hall-effect device, is provided to generate a signal indicative of positioning of the plunger 23 at an extreme of movement.

In Figure 1 the sensor 62 is located to detect the presence of the plunger 23 in its most retracted position in the bale-forming chamber 22, i.e. at the forwardmost end of that chamber.

Signals generated by the sensor 62 are transmitted to the microprocessor 44 and may be used for example to activate a brake that operates on the flywheel shaft 29. This brake is not visible in the figures but may readily be envisaged by the person of skill in the art. The brake may be activated for example when a twine break or needle collision is detected that necessitates maintenance of the internal parts of the baling machine. In such a case it is desirable as explained to halt the plunger 23 at the most retracted position in order to permit access to the needle drive and knotters 39 without having to move the halted plunger 23 as a preliminary step. The output signal of the sensor 62 may be used to time the operation of the brake to ensure that such access is possible.

Activation of the flywheel shaft brake (or, if provided, another brake intended to brake the motion of the plunger 23) may also occur in dependence on the sensing of shearing of a shear fastener such as a shear bolt (if present) that connects the needles 38 to support shaft 43 and/or trip drive motor 42. Such sensing may result from the absence of an output from the needle yoke drive up sensor 53 at a time when the microprocessor 44 detects that power is being supplied to the motor 42.

An alarm signal may be generated at such a time, and transmitted to e.g. a display or audible alarm device in the cab 11b of tractor 11, or to a different location. More generally, any of the fault conditions described herein as giving rise to sensor signal outputs that are taken account of or acted on by the microprocessor may additionally give rise to alarm signals such as the foregoing.

The control logic of the microprocessor 44 may be arranged (e.g. through appropriate programming, storing of programme commands in a memory device that is connectable to the microprocessor 44 or otherwise) to cause the baling machine to operate in accordance with a timing protocol in conjunction with a number of *"if...then"* decisions that are initiated as the various sensors generate output signals that are detected by the microprocessor 44.

Motion of the plunger 23 occurs cyclically continuously while the baling machine 10 is in use to perform baling operations. The plunger 23 is a highly energetic component of the baling machine that because of its connection to flywheel shaft 29 in practice has a high degree of inertia. Once the plunger is reciprocating at full speed it is usually only stopped either at the end of a working session or if a serious fault or emergency arises.

These factors make the output of the plunger position sensor 62, in combination with the output of rotational speed sensor 40, useful for providing timing information based on which further cyclical sub-system fault detection occurs.

The plunger position sensor 62 in the preferred embodiment shown is a pulse train sensor that generates x (i.e. an integer number of) pulses per full machine cycle. Adjacent this sensor is a reference sensor that generates an edge (such sensor types being familiar in the art and not requiring describing herein) relating to a fixed datum or position. The edge is generated once per machine cycle. Interpolation of the pulse train sensor output and the edge signal permits determination of the plunger position at all times. Use of the actual plunger position to determine sensing of the described sub-systems means that timing errors, component wear and similar causes of inaccurate operation that can cause inefficiencies, reductions in bale quality or size, or at worst internal component conditions that cause damage to the baling machine 10, can be taken account of and/or corrected for.

Other methods of accurately determining the position of the plunger 23 are possible and will occur to the person of skill in the art. Such methods are within the scope of the disclosure hereof.

Normally the knotter brake 48 is maintained in an "on" condition, holding the knotter shaft immobile. If the microprocessor receives signals indicative of release and reapplication of the knotter brake 48 and intermediate activation of the needle yoke drive as signalled by needle yoke up sensor 54, an error condition is signalled if there does not also arise within a predetermined timing window a signal indicating activation of the knotter trip drive motor 42.

In this situation the microprocessor 44 may generate an error signal that generates an audible or visible alert in the cab of tractor 11. The tractor operator then can decide whether to abort baling operations and investigate the cause of the failure of the needle yoke to move.

The microprocessor would initiate an automatic response, such as disconnecting power to the powered parts of the baling machine and braking the flywheel and knotter shaft. In the latter case an alert would in the majority of embodiments additionally be generated for the purpose of warning the tractor operator of a fault situation.

An error condition can be determined if the knotter drive shaft activates in the absence of signals indicating for example operation of the needle yoke drive (needle yoke up sensor 53). Similar alerting and/or shut-down actions to those described above then can be initiated.

In another fault or error mode the microprocessor 44 may within a cycle of plunger 23 sense release of the knotter brake 48 and engagement of the needle and knotter trip drives but if there is no movement of the needles as sensed by the needle yoke up sensor 53 this indicates shearing of the shear fastener of the needle yoke drive.

In such a situation the baling operation again could be halted as outlined above and an appropriate fault alert generated. Halting of the plunger motion could be arranged, e.g. by operating a flywheel brake for a duration determined and commanded by the microprocessor 44 based primarily on the outputs of sensor 62, such that the plunger 23 is halted at its forwardmost position of movement thereby permitting ready access to the yoke drive. This makes it straightforward to replace the needle shear fastener (if present) without having initially to reposition the plunger 23.

Another fault mode arises when detection of movement of the needle yoke occurs outside of a predetermined timing window, signifying that the baling machine timing has been lost. Under this circumstance a timing fault alert may be displayed and/or sounded in the cab 11 so as to be detectable by the operator. A remedy in this situation is likely to involve powering down of the baling machine followed by initiation of a reset routine that results in restoration of the desired timing.

In the event of a loss of timing error arising as aforesaid the microprocessor 44 may command immediate de-powering of the needle yoke drive to ensure that no collision of the needles 38 with the plunger 23 can occur.

The twine break sensors 51 if activated generate signals indicative of breaking of the twine in one or more of the knotters 39. In such a scenario a twine break alert can be generated in the cab 11; and/or an interruption in baling operations commanded.

If all the sensor outputs are within expected ranges and occur within expected timing windows no alerts or remedial steps are initiated and operation of the baling machine continues with sampling occurring over the succeeding plunger motion cycles until either a fault condition is detected or the end of baling operations is commanded e.g. through PTO disengagement commands initiated by the tractor operator.

The timing windows may through appropriate design and or coding of the microprocessor 44 or an alternative control device, or e.g. the storing of command instructions in a memory device that can be used to control the microprocessor 44, be arranged to prohibit advancement of the needle yoke during the parts of the plunger motion cycle when the plunger 23 intersects or overlaps with the cyclical locus of the needles. This important feature prevents collisions of the needles with the plunger while the latter is reciprocating during normal (i.e. fault-free) operation.

As an alternative to the rotational shaft speed sensors 40 one may consider rotational encoders. These may be secured to or form part of one or more of the external shafts (or other rotating components) visible in the drawings or may be secured to e.g. an internal shaft or other rotating component of transmission 35 or transmission 31. Such encoders may be of electrical, magnetic or optical types.

The sensor operating in dependence on the position of the stuffer tine 36 may be replaced by e.g. a sensor of the plunger rear dead point.

Instead of combinations of two sensors using comparison algorithms a single encoder with a hardware zero-pulse can be employed to determine the plunger position.

The trip drive motor 42 described herein could be replaced e.g. by one or more linear actuators.

Overall the baling machine of the invention provides a significant advance over the prior art. The ability to control the knotter and needle drives independently leads to considerably greater control flexibility and more accurate operation than previously. Furthermore as explained by the foregoing the causes of faults can be identified with accuracy, whereas in prior art mechanically interconnected twine and knotter sub-systems this is hard or impossible to achieve. The ability to isolate the causes of faults in this way makes it possible to generate alerts and command damage prevention or remedial steps that are targeted to the precise fault identified.

The use of an electronic or programmable control device while not mandatory makes possible the rapid initiation of remedial and/or alerting actions when a fault is detected.

The listing or discussion of an apparently prior-published document in this specification should not necessarily be taken as an acknowledgement that the document is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

## Claims

1. A baling machine (10) including:
a knotter (39) and needle (38) combination, the combination comprising one or more knotters (39) corresponding in number to the needles (38);
a cyclic needle drive (77, 78, 43);
a bale-forming chamber (22) that supports a longitudinally reciprocable bale-forming plunger (23), the bale-forming chamber (22) being penetrable by the one or more needles (38) supporting one or more lengths of twine for knotting bales, the one or more needles (38) being pivotably mounted via the cyclic needle drive (77, 78, 43) for reciprocal movement into and out of the bale-forming chamber (22), and
a knotter drive shaft (41) supporting and driving the one or more knotters (39) the knotters (39) each being capable of engaging twine supported by a respective needle (38) penetrating the bale-forming chamber (22) and describing a knot-forming locus when driven by the knotter drive shaft (41), wherein:
a. the cyclic needle drive (77, 78, 79, 43) and the knotter drive shaft (41) include one or more drive train permitting selective independence of the cyclic needle drive (77, 78, 79, 43) from movement of the knotter drive shaft (41) and/or adjustment of timing of the cyclic needle drive (77, 78, 79, 43) relative to activation of the knotter drive shaft (41);
b. the baling machine (10) includes one or more sensors (40, 45, 46, 51, 52, 53, 54, 57, 62) for sensing conditions prevailing in the baling machine and generating one or more signals indicative thereof;
c. the baling machine (10) includes one or more control devices (44) that determine, based on the one or more signals, the operational status of the knotter (39) and needle (38) combination and that command operation or deactivation of one or more sub-systems of the baling machine (10) in dependence thereon; and
d. the one or more control devices is configured to control motion of the needles 38 and action of the knotters 39 in dependence on the sensed conditions and/or operational statuses of parts of the baling machine
**characterized in that** the baling machine further includes a trip drive motor (42) that is selectively operable and that when operated completes a drive cycle that causes engagement of driving of the knotter drive shaft (41) and activation of the cyclic needle drive (77, 78, 79, 43); and wherein the one or more sensors includes a sensor (54) sensing operation of the trip drive motor.

2. A baling machine according to Claim 1 including a knotter clutch (64) that is caused to engage on operation of the trip drive motor (42) to cause driving of the knotter drive shaft (41) and the cyclic needle drive (77, 78, 79, 43); and including a second clutch mechanism (81) that is caused to engage on operation of the trip drive motor to cause activation of the cyclic needle drive (77, 78, 79, 43) and/or permit adjustment of the timing of motion of the cyclic needle drive (77, 78, 79, 43) relative to motion of the knotter drive shaft (41).

3. A baling machine (10) according to Claim 1 or Claim 2 including an openable shield (61), wherein the one or more sensors includes a shield sensor (45) sensing the open/closed status of the openable shield (61) and wherein the one or more control devices (44) inhibits activation of the trip drive motor (42) when the shield sensor (45) senses an open status of the shield (61).

4. A baling machine (10) according to Claim 3 including one or more fans in the vicinity of the one or more knotters (39), wherein the openable shield (61) when closed inhibits access to the one or more fans and the one or more knotters (39).

5. A baling machine (10) according to Claim 3 or Claim 4 including one or more control actuator (56) that when actuated causes the one or more control devices (44) to over-ride inhibiting of the needle trip drive motor (42) and effect completion of a drive cycle when the shield (61) is open.

6. A baling machine (10) according to Claim 5 wherein the one or more control actuator (56) is located on the baling machine to be humanly accessible only when the shield (61) is open.

7. A baling machine (10) according to any preceding claim including a knotter brake disc (47) secured for co-rotation with the knotter shaft (41), wherein the one or more sensors includes a brake disc sensor (46) sensing the rotational position of the brake disc (47) and wherein the one or more control devices (44) controls the cyclical position of the knotter shaft (38) in dependence on the sensed rotational position of the brake disc (47).

8. A baling machine (10) according to Claim 7 including a brake (43) that is controlledly capable of acting on the knotter brake disc (47) to cause braking of the knotter shaft.

9. A baling machine (10) according to any preceding claim wherein the one or more sensors includes one or more sensors (51) of breakage of the twine and/or mis-tying of a knot.

10. A baling machine (10) according to any preceding claim including a rotatable length-measuring wheel (52) that rotates in proportion to the length of a bale formed in the bale-forming chamber (22); and wherein the one or more sensors includes a sensor of rotation of the length-measuring wheel (52) that generates a signal proportional to the length of the bale.

11. A baling machine (10) according to any preceding claim including one or more rotatable shaft (27) connected to a rotating power take-off, wherein the two or more sensors include a sensor (40) of a rotational speed of one or more said rotatable shaft and wherein the one or more control devices (44) controls timing of operation of one or more sub-systems of the baling machine (10) in dependence on the sensed rotational speed.

12. A baling machine (10) according to any preceding claim including one or more trip drive for driving the knotter shaft (41) and one or more power-off actuator (58) for disconnecting power to the one or more trip drive.

13. A baling machine (10) according to Claim 12 including at least two said power-off actuators (58) disposed to be respectively accessible to an operator positioned on the left-hand side or the right-hand side of the baling machine (10).

14. A baling machine (10) according to any preceding claim including a pre-baling chamber (50) in which a pre-baling mechanism (60) collects plant matter for feeding in to the bale-forming chamber (22), the pre-baling chamber (50) including one or more plant matter feeding sensors (60) for generating one or more signals indicative of feeding of plant matter in to the bale-forming chamber.

15. A baling machine (10) according to Claim 14 wherein the one or more plant matter feeding sensors includes an electrically and/or magnetically conductive element that moves in co-ordinated fashion with feeding of plant matter to the bale-forming chamber (22) and a detector that is capable of generating one or more signal based on movement of the electrically and/or magnetically conductive element.

16. A baling machine (10) according to any preceding claim including one or more plunger position sensor (62) that is capable of generating one or more signals indicative of positioning of the plunger (23) at a point in its reciprocation furthest from the location at which the one or more needles (38) penetrate the bale-forming chamber.

17. A baling machine (10) according to Claim 16 including a plunger brake that is operable to halt motion of the plunger and wherein the one or more control devices (44) on operation of the brake causes, in dependence on one or more signals generated by the one or more plunger position sensors (62), halting of the plunger at a said point in its reciprocation furthest from the location at which the one or more needles (38) penetrate the bale-forming chamber.

18. A baling machine (10) according to any preceding claim wherein the one or more control devices (44) is or includes a programmable device and/or a logic circuit.

## Patentansprüche

1. Ballenpresse (10), umfassend:
eine Knoter- (39) Nadel- (38) Kombination, wobei die Kombination einen oder mehrere Knoter (39) umfasst, deren Anzahl der Anzahl der Nadeln (38) entspricht;
einen zyklischen Nadelantrieb (77, 78, 43);
eine Ballenpresskammer (22), die einen in Längsrichtung hin- und herbewegbaren Ballenpresskolben (23) lagert, wobei die Ballenpresskammer (22) von der einen oder den mehreren Nadeln (38), die einen oder mehrere Garnabschnitte zum Verknoten der Ballen tragen, durchdringbar ist, wobei die eine oder die mehreren Nadeln (38) mittels des zyklischen Nadelantriebs (77, 78, 43) schwenkbar montiert sind, um eine hin- und hergehende Bewegung in die und aus der Ballenpresskammer (22) auszuführen; und
eine Knoterantriebswelle (41), die die einen oder die mehreren Knoter (39) lagert und antreibt, wobei die Knoter (39) jeweils dazu in der Lage sind, Garn zu erfassen, das von einer jeweiligen Nadel (38), die die Ballenpresskammer (22) durchdringt, gehalten wird, und beim Antrieb durch die Knoterantriebswelle (41) eine knotenerzeugende Bahn zu beschreiben, wobei:
a. der zyklische Nadelantrieb (77, 78, 79, 43) und die Knoterantriebswelle (41) einen oder mehrere Antriebsstränge umfassen, die eine wählbare Unabhängigkeit des zyklischen Nadelantriebs (77, 78, 79, 43) von der Bewegung der Knoterantriebswelle (41) und/oder eine Anpassung der Taktung des zyklischen Nadelantriebs (77, 78, 79, 43) relativ zur Aktivierung der Knoterantriebswelle (41) erlauben;
b. die Ballenpresse (10) einen oder mehrere Sensoren (40, 45, 46, 51, 52, 53, 54, 57, 62) umfasst, die Betriebszustände erfassen, die in der Ballenpresse herrschen, und ein oder mehrere Signale erzeugen, die kennzeichnend dafür sind;
c. die Ballenpresse (10) ein oder mehrere Steuergeräte (44) umfasst, die basierend auf dem einen oder den mehreren Signalen den Betriebszustand der Knoter- (39) Nadel- (38) Kombination bestimmen und die den Betrieb oder die Deaktivierung eines oder mehrerer Subsysteme der Ballenpresse (10) in Abhängigkeit davon veranlassen; und
d. das eine oder die mehreren Steuergeräte dazu eingerichtet sind, die Bewegung der Nadeln (38) und die Aktion der Knoter (39) in Abhängigkeit von den erfassten Bedingungen und/oder den Betriebszuständen von Teilen der Ballenpresse zu steuern,
**dadurch gekennzeichnet, dass** die Ballenpresse weiterhin einen Auslöseantriebsmotor (42) umfasst, der wahlweise betreibbar ist und bei Betrieb einen Antriebszyklus vollzieht, der das Antreiben der Knoterantriebswelle (41) und die Aktivierung des zyklischen Nadelantriebs (77, 78, 79, 43) bewirkt; und wobei der eine oder die mehreren Sensoren einen Sensor (54) umfassen, der den Betrieb des Auslöseantriebsmotors erfasst.

2. Ballenpresse nach Anspruch 1, umfassend eine Knoterkupplung (64), die beim Betrieb des Auslöseantriebsmotors (42) zum Eingriff gebracht wird, um das Antreiben der Knoterantriebswelle (41) und des zyklischen Nadelantriebs (77, 78, 79, 43) zu bewirken; und umfassend einen zweiten Kupplungsmechanismus (81), der beim Betrieb des Auslöseantriebsmotors zum Eingriff gebracht wird, um die Aktivierung des zyklischen Nadelantriebs (77, 78, 79, 43) zu bewirken und/oder eine Anpassung der Taktung der Bewegung des zyklischen Nadelantriebs (77, 78, 79, 43) relativ zur Bewegung der Knoterantriebswelle (41) zu erlauben.

3. Ballenpresse (10) nach Anspruch 1 oder 2, umfassend eine zu öffnende Abdeckung (61), wobei der eine oder die mehreren Sensoren einen Abdeckungssensor (45) umfassen, der den Offen-/Geschlossen-Zustand der zu öffnenden Abdeckung (61) erfasst, und wobei das eine oder die mehreren Steuergeräte (44) die Aktivierung des Auslöseantriebsmotors (42) unterdrücken, wenn der Abdeckungssensor (45) einen Offen-Zustand der Abdeckung (61) erfasst.

4. Ballenpresse (10) nach Anspruch 3, umfassend einen oder mehrere Lüfter im Bereich des einen oder der mehreren Knoter (39), wobei die zu öffnende Abdeckung (61), wenn sie geschlossen ist, den Zugang zu dem einen oder den mehreren Lüftern und dem einen oder den mehreren Knotern (39) unterbindet.

5. Ballenpresse (10) nach Anspruch 3 oder 4, umfassend einen oder mehrere Steuerbetätiger (56), die bei Betätigung das eine oder die mehreren Steuergeräte (44) veranlassen, das Unterdrücken der Aktivierung des Auslöseantriebsmotors (42) zu übergehen und einen Antriebszyklus abzuschließen, wenn die Abdeckung (61) offen ist.

6. Ballenpresse (10) nach Anspruch 5, wobei der eine oder die mehreren Steuerbetätiger (56) an der Ballenpresse so angeordnet sind, dass sie nur bei offener Abdeckung (61) durch eine Person zugänglich sind.

7. Ballenpresse (10) nach einem der vorhergehenden Ansprüche, umfassend eine Knoter-Bremsscheibe (47), die drehfest mit der Knoterantriebswelle (41) verbunden ist, wobei der eine oder die mehreren Sensoren einen Bremsscheibensensor (46) umfassen, der die Drehposition der Bremsscheibe (47) erfasst, und wobei das eine oder die mehreren Steuergeräte (44) die zyklische Position der Knoterantriebswelle (41) in Abhängigkeit von der erfassten Drehposition der Bremsscheibe (47) steuern.

8. Ballenpresse (10) nach Anspruch 7, umfassend eine Bremse (43), die gesteuert auf die Knoter-Bremsscheibe (47) einwirken kann, um die Knoterantriebswelle abzubremsen.

9. Ballenpresse (10) nach einem der vorhergehenden Ansprüche, wobei der eine oder die mehreren Sensoren einen oder mehrere Sensoren (51) zum Erfassen von Garnbruch und/oder Fehlschlag eines Knotens umfassen.

10. Ballenpresse (10) nach einem der vorhergehenden Ansprüche, umfassend ein drehbares Längenmessrad (52), das proportional zur Länge eines in der Ballenpresskammer (22) gebildeten Ballens rotiert, und wobei der eine oder die mehreren Sensoren einen Sensor zur Erfassung der Drehung des Längenmessrads (52) umfassen, der ein Signal erzeugt, das proportional zur Ballenlänge ist.

11. Ballenpresse (10) nach einem der vorhergehenden Ansprüche, umfassend eine oder mehrere drehbare Wellen (27), die mit einer drehenden Zapfwelle verbunden sind, wobei der eine oder die mehreren Sensoren einen Sensor (40) zur Erfassung der Drehzahl der einen oder mehrerer drehbarer Wellen umfassen, und wobei das eine oder die mehreren Steuergeräte (44) die Taktung des Betriebs eines oder mehrerer Subsysteme der Ballenpresse (10) in Abhängigkeit von der erfassten Drehzahl steuert.

12. Ballenpresse (10) nach einem der vorhergehenden Ansprüche, umfassend einen oder mehrere Auslöseantriebe zum Antreiben der Knoterantriebswelle (41) und einen oder mehrere Abschaltbetätiger (58) zum Trennen der Stromversorgung des einen oder der mehreren Auslöseantriebe.

13. Ballenpresse (10) nach Anspruch 12, umfassend mindestens zwei Abschaltbetätiger (58), die so angeordnet sind, dass sie jeweils von einer Bedienperson, die auf der linken oder rechten Seite der Ballenpresse (10) positioniert ist, erreichbar sind.

14. Ballenpresse (10) nach einem der vorhergehenden Ansprüche, umfassend eine Vorpresskammer (50), in der ein Vorpressmechanismus (60) Pflanzenmaterial zur Zuführung in die Ballenpresskammer (22) sammelt, wobei die Vorpresskammer (50) einen oder mehrere Sensoren (60) zur Erfassung der Zuführung des Pflanzenmaterials in die Ballenpresskammer umfasst.

15. Ballenpresse (10) nach Anspruch 14, wobei der eine oder die mehreren Sensoren zur Erfassung der Zuführung des Pflanzenmaterials ein elektrisch und/oder magnetisch leitfähiges Element umfassen, das sich koordiniert mit der Zuführung von Pflanzenmaterial in die Ballenpresskammer (22) bewegt, und einen Detektor, der in der Lage ist, ein oder mehrere Signale basierend auf der Bewegung des elektrisch und/oder magnetisch leitfähigen Elements zu erzeugen.

16. Ballenpresse (10) nach einem der vorhergehenden Ansprüche, umfassend einen oder mehrere Kolbenpositionssensoren (62), die in der Lage sind, ein oder mehrere Signale zu erzeugen, die kennzeichnend für die Positionierung des Kolbens (23) an einem Punkt seines Hubweges sind, der am weitesten von der Stelle entfernt ist, an der die eine oder die mehreren Nadeln (38) in die Ballenpresskammer eindringen.

17. Ballenpresse (10) nach Anspruch 16, umfassend eine Kolbenbremse, die betreibbar ist, um die Bewegung des Kolbens zu stoppen, wobei das eine oder die mehreren Steuergeräte (44) beim Betätigen der Bremse, in Abhängigkeit von einem oder mehreren von dem oder den Kolbenpositionssensor(en) (62) erzeugten Signalen, den Kolben an diesem Punkt seines Hubweges anhalten.

18. Ballenpresse (10) nach einem der vorhergehenden Ansprüche, wobei das eine oder die mehreren Steuergeräte (44) ein programmierbares Gerät und/oder eine Logikschaltung ist oder umfasst.

## Revendications

1. Une presse à balles (10) comprenant :
une combinaison de noueurs (39) et d'aiguilles (38), la combinaison comprenant un ou plusieurs noueurs (39) correspondant en nombre aux aiguilles (38) ;
un entraînement cyclique d'aiguille (77, 78, 43) ;
une chambre de compression de balles (22) qui soutient un piston de compression de balles (23) ayant un mouvement alternatif selon un axe longitudinal, la chambre de compression de balles (22) étant traversée par la ou les aiguilles (38) soutenant une ou plusieurs longueurs de ficelle pour nouer les balles, la ou les aiguilles (38) étant installées de manière pivotante par le biais de l'entraînement cyclique d'aiguille (77, 78, 43) pour effectuer un mouvement alternatif dans et hors de la chambre de compression de balles (22), et
un arbre d'entraînement de noueur (41) soutenant et entraînant le ou les noueurs (39), les noueurs (39) étant tous capables d'engager la ficelle soutenue par une aiguille respective (38) pénétrant dans la chambre de compression de balles (22) et décrivant un locus de formation de nœuds lorsqu'ils sont entraînés par l'arbre d'entraînement de noueur (41), dans lequel :
a. l'entraînement cyclique d'aiguille (77, 78, 79, 43) et l'arbre d'entraînement de noueur (41) incluent un ou plusieurs trains d'entraînement permettant l'indépendance sélective de l'entraînement cyclique d'aiguille (77, 78, 79, 43) par rapport au mouvement de l'arbre d'entraînement de noueur (41) et/ou l'ajustement de la synchronisation de l'entraînement cyclique d'aiguille (77, 78, 79, 43) par rapport à l'activation de l'arbre d'entraînement de noueur (41) ;
b. la presse à balles (10) inclut un ou plusieurs capteurs (40, 45, 46, 51, 52, 53, 54, 57, 62) pour détecter les conditions prévalant dans la presse à balles et générer un ou plusieurs signaux indicatifs de celles-ci ;
c. la presse à balles (10) inclut un ou plusieurs dispositifs de commande (44) qui déterminent, en fonction d'un ou de plusieurs signaux, l'état de fonctionnement de la combinaison de noueurs (39) et d'aiguilles (38) et qui commandent le fonctionnement ou la désactivation d'un ou de plusieurs sous-systèmes de la presse à balles (10) en fonction desdits signaux ; et
d. le ou les dispositifs de commande sont configurés pour commander le mouvement des aiguilles (38) et l'action des noueurs (39) en fonction des conditions détectées et/ou des états de fonctionnement des pièces de la presse à balles
**caractérisée en ce que** la presse à balles inclut en outre un moteur d'entraînement de déclenchement (42) qui peut être actionné de manière sélective et qui, lorsqu'il est actionné, accomplit un cycle d'entraînement qui provoque l'engagement de l'entraînement de l'arbre d'entraînement de noueur (41) et l'activation de l'entraînement cyclique d'aiguille (77, 78, 79, 43) ; et dans laquelle le ou les capteurs incluent un capteur (54) qui détecte le fonctionnement du moteur d'entraînement de déclenchement.

2. Une presse à balles selon la revendication 1, incluant un embrayage de noueur (64) qui est amené à s'engager lors du fonctionnement du moteur d'entraînement de déclenchement (42) pour entraîner l'arbre d'entraînement de noueur (41) et l'entraînement cyclique d'aiguille (77, 78, 79, 43) ; et incluant un second mécanisme d'embrayage (81) qui est amené à s'engager lors du fonctionnement du moteur d'entraînement de déclenchement pour provoquer l'activation de l'entraînement cyclique d'aiguille (77, 78, 79, 43) et/ou permettre l'ajustement de la synchronisation du mouvement de l'entraînement cyclique d'aiguille (77, 78, 79, 43) par rapport au mouvement de l'arbre d'entraînement de noueur (41).

3. Une presse à balles (10) selon la revendication 1 ou la revendication 2, comprenant un dispositif de protection ouvrable (61), et dans laquelle le ou les capteurs incluent un capteur de dispositif de protection (45) détectant l'état ouvert/fermé du dispositif de protection ouvrable (61) et dans laquelle le ou les dispositifs de commande (44) inhibent l'activation du moteur d'entraînement de déclenchement (42) lorsque le capteur de dispositif de protection (45) détecte un état ouvert du dispositif de protection (61).

4. Une presse à balles (10) selon la revendication 3, comprenant un ou plusieurs ventilateurs à proximité d'un ou de plusieurs noueurs (39), dans laquelle le dispositif de protection ouvrable (61), lorsqu'il est fermé, inhibe l'accès à un ou plusieurs ventilateurs et à un ou plusieurs noueurs (39).

5. Une presse à balles (10) selon la revendication 3 ou la revendication 4, incluant un ou plusieurs actionneurs de commande (56) qui, lorsqu'ils sont actionnés, amènent le ou les dispositifs de commande (44) à neutraliser l'inhibition du moteur d'entraînement de déclenchement d'aiguille (42) et à effectuer un cycle d'entraînement lorsque le dispositif de protection (61) est ouvert.

6. Une presse à balles (10) selon la revendication 5, dans laquelle le ou les actionneurs de commande (56) sont situés sur la presse à balles pour être humainement accessibles uniquement lorsque le dispositif de protection (61) est ouvert.

7. Une presse à balles (10) selon l'une quelconque des revendications précédentes incluant un disque de frein de noueur (47) fixé pour une co-rotation avec l'arbre de noueur (41), dans laquelle le ou les capteurs incluent un capteur de disque de frein (46) détectant la position de rotation du disque de frein (47) et dans laquelle le ou les dispositifs de commande (44) contrôlent la position cyclique de l'arbre de noueur (38) en fonction de la position de rotation détectée du disque de frein (47).

8. Une presse à balles (10) selon la revendication 7, comprenant un frein (43) capable d'agir de manière contrôlée sur le disque de frein du noueur (47) pour entraîner le freinage de l'arbre de noueur.

9. Une machine à balles (10) selon l'une quelconque des revendications précédentes, dans laquelle le ou les capteurs incluent un ou plusieurs capteurs (51) de rupture de la ficelle et/ou de mauvais nouage d'un nœud.

10. Une presse à balles (10) selon l'une quelconque des revendications précédentes, incluant une roue de mesure de longueur rotative (52) qui tourne proportionnellement à la longueur d'une balle formée dans la chambre de compression de balles (22) ; et dans laquelle le ou les capteurs incluent un capteur de rotation de la roue de mesure de longueur (52) qui génère un signal proportionnel à la longueur de la balle.

11. Une presse à balles (10) selon l'une quelconque des revendications précédentes, incluant un ou plusieurs arbres rotatifs (27) raccordés à une prise de force rotative, dans laquelle deux ou plusieurs capteurs incluent un capteur (40) de vitesse de rotation dudit ou desdits arbres rotatifs et dans laquelle le ou les dispositifs de commande (44) contrôlent la synchronisation du fonctionnement d'un ou de plusieurs sous-systèmes de la presse à balles (10) en fonction de la vitesse de rotation détectée.

12. Une presse à balles (10) selon l'une quelconque des revendications précédentes, incluant un ou plusieurs entraînements de déclenchement pour l'entraînement de l'arbre de noueur (41) et un ou plusieurs actionneurs de mise hors tension (58) pour déconnecter l'alimentation du ou des entraînements de déclenchement.

13. Une presse à balles (10) selon la revendication 12, incluant au moins deux desdits actionneurs de mise hors tension (58) disposés de manière à être respectivement accessibles par un opérateur positionné sur le côté gauche ou le côté droit de la presse à balles (10).

14. Une presse à balles (10) selon l'une quelconque des revendications précédentes, incluant une chambre de pré-mise en balles (50) dans laquelle un mécanisme de pré-mise en balles (60) recueille des matières végétales pour alimenter la chambre de compression de balles (22), la chambre de pré-mise en balles (50) incluant un ou plusieurs capteurs d'alimentation en matières végétales (60) pour générer un ou plusieurs signaux indiquant l'alimentation en matières végétales dans la chambre de compression de balles.

15. Une presse à balles (10) selon la revendication 14, dans laquelle le ou les capteurs d'alimentation en matières végétales incluent un élément à conduction électrique et/ou magnétique qui se déplace de manière coordonnée avec l'alimentation en matières végétales vers la chambre de compression de balles (22) et un détecteur capable de générer un ou plusieurs signaux en fonction du mouvement de l'élément à conduction électrique et/ou magnétique.

16. Une presse à balles (10) selon l'une quelconque des revendications précédentes, incluant un ou plusieurs capteurs de position de piston (62) capables de générer un ou plusieurs signaux indiquant le positionnement du piston (23) à un point de son mouvement alternatif le plus éloigné de l'endroit où l'une ou plusieurs aiguilles (38) pénètrent dans la chambre de compression de balles.

17. Une presse à balles (10) selon la revendication 16, incluant un frein de piston qui peut être actionné pour stopper le mouvement du piston et dans laquelle le ou les dispositifs de commande (44) en actionnant le frein provoquent, en fonction d'un ou de plusieurs signaux générés par le ou les capteurs de position du piston (62), l'arrêt du piston audit point de son mouvement alternatif le plus éloigné de l'endroit où la ou les aiguilles (38) pénètrent dans la chambre de compression de balles.

18. Une presse à balles (10) selon l'une quelconque des revendications précédentes, dans laquelle le ou les dispositifs de commande (44) sont ou incluent un dispositif programmable et/ou un circuit logique.
